Europäisches Patentamt

**European Patent Office**

**Office européen des brevets**

Veröffentlichungsnummer: **0 296 273**

**A2**

## EUROPÄISCHE PATENTANMELDUNG

Anmeldenummer: **87109743.2**

Int. Cl.⁴ **B07B 1/46**

Anmeldetag: **07.07.87**

Priorität: **26.06.87 DE 3721062**

Veröffentlichungstag der Anmeldung:
**28.12.88 Patentblatt 88/52**

Benannte Vertragsstaaten:
**AT BE CH DE ES FR GB IT LI NL SE**

Anmelder: **Hein, Lehmann Aktiengesellschaft**
**Fichtenstrasse 75**
**D-4000 Düsseldorf 1(DE)**

Anmelder: **Isenmann Siebe GmbH**
**Gerwigstrasse 67**
**D-7500 Karlsruhe(DE)**

Erfinder: **Lehmann, Wolfgang**
**Leopold-Dony-Strasse 5**
**D-7554 Oberndorf-Kuppenheim(DE)**
Erfinder: **Neukam, Christian**
**Friedrich-Naumann-Strasse 52**
**D-7500 Karlsruhe 21(DE)**

Vertreter: **Patentanwaltsbüro Cohausz &**
**Florack**
**Postfach 14 01 47**
**D-4000 Düsseldorf 1(DE)**

Verfahren zum Herstellen eines Siebelements und Siebelement nach diesem Verfahren.

Die Erfindung betrifft ein Verfahren zum Herstellen eines rechteckförmigen Siebelements aus Kunststoff oder gummielastischem Material, das an der Siebmaschinenunterkonstruktion neben weiteren Siebelementen lösbar befestigbar ist, wobei es eine flexible Siebfläche geringer Dicke aufweist, die rundum an einem Rand befestigt wird, dessen Höhe ein Mehrfaches der Dicke der Siebfläche beträgt und der als Armierung einen Rahmen aufweist. Die Siebfläche wird vor ihrer Befestigung am Rand oder Rahmen ganzflächig erwärmt und hierdurch in alle Richtungen gedehnt, in diesem gedehnten Zustand am Rand oder Rahmen befestigt. Danach wird die Siebfläche zur Erzeugung ihrer Spannung abgekühlt.

Xerox Copy Centre

## Verfahren zum Herstellen eines Siebelements und Siebelement nach diesem Verfahren

Aus der DE-OS 28 49 838 ist ein Siebbelag bekannt, der aus einzelnen Kunststoffsiebelementen zusammengesetzt ist. Der rundum verlaufende Rand jedes Siebelementes weist eine größere Dicke auf als die dazwischen liegende Siebfläche. Die Siebfläche besitzt nach unten ragende Verstärkungsrippen. Eine solch kräftig ausgeführte Siebfläche erheblicher Dicke ist im wesentlichen ein starres Element, das bis auf unbedeutende Abweichungen im wesentlichen in derselben Weise - schwingt wie der Siebelementenrand, und damit der gesamte Siebbelag, der von der Siebmaschine in Schwingungen versetzt wird. Auch ist es bekannt, die Siebränder zur Verstärkung mit Armierungseisen zu versehen.

Das Trockenabsieben von feinkörnigem Gut, wie Brechsand, mit diesem bekannten Siebelementen gestaltet sich besonders in Regenperioden oder den Jahreszeiten mit hoher Luftfeuchtigkeit als sehr schwierig. Der Steinmehlanteil im Aufgabegut nimmt Feuchtigkeit auf und setzt den Siebbelag zu. Um dieses Anbacken auf dem Siebbelag zu vermeiden, sind folgende Lösungen bekannt:

1. Siebmaschinen mit Quertraversen, die den Siebbelag abwechselnd stauchen und strecken.

2. Harfensiebe, bei denen die einzelnen Drähte eine Eigenschwingung zusätzlich zur Schwingung der Maschine entwickeln und damit den Siebbelag verstopfungsfrei halten. Der Verschleiß ist relativ hoch.

3. Kunststoffsiebe, bei denen die einzelnen Sieböffnungen nicht als quadratisches, rundes oder rechteckiges Loch ausgebildet sind, sondern die Form eines U haben. Die aus der U-Form sich ergebende Lippe soll ähnlich dem Harfensieb eine eigene, zusätzliche Schwingung entwickeln und den Siebbelag freihalten. Die sich ständig verändernde Sieböffnung aufgrund der Bewegung der Zunge führt zu einer Ungenauigkeit der Trenngrenze.

4. Kuststoffsiebbeläge mit einer dünnen, gelochten Matte, die auf dem Belag nur an den äußeren Rändern befestigt ist und im Siebbodenbereich lose auf der Unterkonstruktion aufliegt. Durch die Schwingungsbewegung der Maschine kommt der lose Bereich der Matte in Bewegung und klopft auf die Unterkonstruktion bei jeder Bewegung. Die flatternde Bewegung der Matte soll einen Selbstreinigungseffekt erzielen. Die von der Maschine aufgebrachte Energie reicht aber nicht aus, die gesamte Matte in eine Flatterschwingung zu bringen. Auch führt die örtlich begrenzte Flatterbewegung durch die Dauerbiegebelastung der Matte an der gleichen Stelle zum vorzeitigen Bruch.

5. Klopfvorrichtungen verschiedenster Konstruktionsarten unter den Siebbelägen, um dem Zuwachsen der Siebbeläge durch feuchtes Feingut entgegenzuwirken.

Auch sind unter Spannung stehende Siebmatten an sich bekannt, wie dies die DE-OS 22 40 051 zeigt. Die Montage solcher Siebbeläge ist aufwendig.

Für die Herstellung solcher Siebrahmen wurde vorgeschlagen, eine rechteckige Siebfläche durch Zugkräfte allseitig elastisch zu dehnen und dann mit einem starren Rahmen durch Kleben, Nageln, Schrauben oder dergleichen fest zu verbinden. Aber nur die Mittelzone wird senkrecht zu den Seitenkanten der Siebfläche elastisch gedehnt. Je weiter man von den Mittelzonen nach außen geht, desto wirksamer wird die Dehnung in der entgegengesetzten Richtung. Mit Spannelementen, z.B. Rundstäben an allen vier Seiten, um die das Siebgewebe geschlagen und dann gespannt wird, können keine gleichmäßigen Spannungen der Siebfläche erreicht werden.

Man könnte die Siebfläche mechanisch, pneumatisch oder hydraulisch spannen, indem eine Vielzahl dieser Spannelemente in schmalen Zonen an den Außenkanten der Siebfläche angreifen und in den resultierenden Richtungen wirksam werden. Das wäre aber eine aufwendige Fertigung, zumal die Siebelemente in den unterschiedlichsten Abmessungen von den Kunden verlangt werden, entsprechend den Abmessungen der Siebdecks in den Maschinen. Außerdem benötigt man die Siebfläche in Übergröße für das Befestigen der Spannelemente. Auch stehen nach dem Aufbringen der starren Rahmen die Ränder der Siebfläche über und müssen anschließend abgeschnitten werden.

Aufgabe der Erfindung ist es, einen Siebbelag der eingangs genannten Art so zu verbessern, daß bei einfachster Herstellung der Siebelemente diese auch bei siebschwierigem Gut verstopfungsfrei gehalten werden.

Dies Aufgabe wird erfindungsgemäß dadurch gelöst, daß die Siebfläche vor ihrer Bestigung am Rand oder Rahmen ganzflächig erwärmt und hierdurch in alle Richtungen gedehnt wird, in diesem gedehnten Zustand am Rand oder Rahmen befestigt wird und daß danach die Siebfläche zur Erzeugung ihrer Spannung abgekühlt wird.

Die gleichmäßige Dehnung der Siebfläche wird durch gleichmäßiges Erwärmen bewirkt. Das erzeugt eine gleichmäßige Ausdehnung in allen vier Richtungen. Dann wird der starre Armierungsrahmen aufgelegt und mit Kunststoff umgossen. Nach dem Abbinden sind Siebfläche und Rahmen zu einer Einheit homogen fest verbunden. Nach dem Abkühlen ist die Siebfläche allseitig gleichmäßig in vorgegebener Stärke trommelfellartig gespannt.

In dem fertigen Siebrahmen wird die gleichmäßig gespannte dünne Siebfläche durch die Schwingbewegung der Siebmaschine einerseits und dem trommelnden Aufprall des Siebgutes andererseits zu Eigenschwingungen angeregt, die den erwünschten Reinigungseffekt bewirken. Das ermöglicht das einwandfreie Absieben von siebschwierigen Gütern wie nasser Sand, Siebgut mit klebrigen Bestandteilen, usw.

Bei dem erfindungsgemäßen Siebbelag ist es also nicht erforderlich, den gesamten Siebbelag vorzuspannen, sondern die Spannung der siebwirksamen Bereiche wird durch die einzelnen Siebelemente erzeugt. Diese siebwirksamen Flächen werden durch das Schwingen der Siebmaschine und durch das rhythmische Aufprallen des Siebgutes ähnlich einem Trampolin in Schwingungen versetzt, die die Sieböffnungen freihalten. Hierbei werden zusätzlich die Vorteile erreicht, daß der Siebbelag aufs Einfachste montierbar und demontierbar ist, die Siebelemente einfach und preiswert hergestellt werden können und bei geringstem Verschleiß genau definierte Bewegungen des Siebbelages erzeugt werden.

Vorteilhafte Ausgestaltungen der Erfindung sind in den Unteransprüchen aufgeführt.

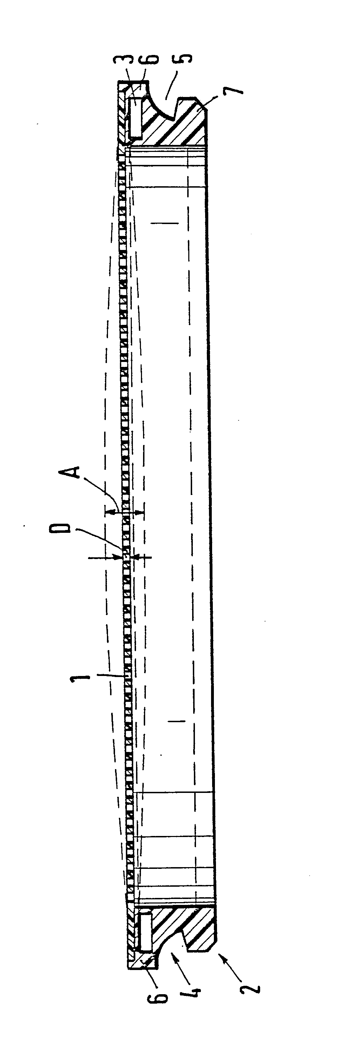

Ein Ausführungsbeispiel eines einzelnen Siebelementes ist in der Zeichnung in einem senkrechten Schnitt dargestellt und wird im folgenden näher beschrieben.

Eine mit Sieböffnungen versehene Siebfläche 1 (Spannmatte) weist eine Dicke bis 10 mm, vornehmlich 1,5 bis 4 mm auf und ist aufgrund dieser verhältnismäßig geringen Dicke flexibel. Diese Siebfläche 1 aus Kunststoff, insbesondere Polyurethan, ist mit ihrem Rand 1a auf der Oberseite eines Randprofiles 2 befestigt, das ringsum der rechteckförmigen Siebfläche 1 verläuft. Das Randprofil 2 besteht auch aus Kunststoff, insbesondere Polyurethan und umschließt einen Rahmen 3 aus Stahl, insbesondere Federstahl und/oder Glasfaserkunststoff.

Diese rundum verlaufende rahmenförmige Armierung 3 hält die Spannung der Siebfläche 1 aufrecht, da während der Herstellung dafür gesorgt wird, daß die Siebfläche 1 eine Vorspannung erhält. Diese Spannung beträgt mindestens 1% der Länge bzw. Breite der Siebfläche 1.

Das aus Siebfläche 1 und Randprofil 2 bestehende Siebelement wird in der Weise hergestellt, daß die rechteckförmige Siebfläche 1 und der Rahmen 3 getrennt vorgefertigt werden, um danach in eine Form gelegt zu werden, deren Hohlraum dem Randprofil 2 entspricht. Die Siebfläche erhält in der Weise eine Spannung, daß sie die Siebfläche vor ihrer Befestigung am Rand oder Rahmen ganzflächig erwärmt und hierdurch in alle Richtungen gedehnt wird. In diesem gedehnten Zustand wird die Siebfläche am Rand oder Rahmen befestigt, indem die Form mit Kunststoff, insbesondere Polyurethan ausgefüllt wird. Nach Erhärten des Kunststoffs und Herausnahme des Siebelements aus der Form entsteht durch Abkühlung die Spannung der Siebfläche 1, die durch den Rahmen 3 rundum aufrecht erhalten wird, so daß die Siebfläche 1 ähnlich einem Trampolin oder einem Trommelfell gespannt ist. Die von der Siebmaschine auf den Siebbelag wirkenden Schwingungen erzeugen Schwingungen der Siebfläche 1 mit einer Amplitude A, die größer ist als die Dicke D der Siebfläche.

Das Material des Randprofils 2 verbindet nicht nur Siebfläche 1 und Rahmen 3 miteinander, sondern sorgt auch für eine Verbindung des gesamten Siebelementes mit der Siebmaschine. Hierzu weist die seitliche senkrechte Stirnseite 4 des Randprofils 2 einen Rücksprung 5 zwischen einem oberen Vorsprung 6 und einem unteren Vorsprung 7 auf, so daß das Randprofil 2 mit seinem Rücksprung 5 an einem nicht dargestellten Vorsprung einer Leiste einrasten kann. Der Rahmen 3 liegt oberhalb des Rücksprungs 5 und knapp unterhalb des keine Sieböffnungen aufweisenden Randes der Siebfläche 1, so daß der Rahmen 3 die Vorspannung direkt auf dem kürzesten Weg auf die Siebfläche 1 ausübt.

## Ansprüche

1. Verfahren zum Herstellen eines rechteckförmigen Siebelements aus Kunststoff oder gummielastischem Material, das an der Siebmaschinenunterkonstruktion neben weiteren Siebelementen lösbar befestigbar ist, wobei es eine flexible Siebfläche geringer Dicke aufweist, die rundum an einem Rand befestigt wird, dessen Höhe ein Mehrfaches der Dicke den Siebfläche beträgt und der als Armierung einen Rahmen aufweist, **dadurch gekennzeichnet,** daß die Siebfläche (1) vor ihrer Befestigung am Rand (2) oder Rahmen (3) ganzflächig erwärmt und hierdurch in alle Richtungen gedehnt wird, in diesem gedehnten Zustand am Rand (2) oder Rahmen (3) befestigt wird und daß danach die Siebfläche (1) zur Erzeugung ihrer Spannung abgekühlt wird.

2. Verfahren nach Anspruch 1, **dadurch gekennzeichnet,** daß auf die gedehnte Siebfläche der Rand (2) mit seinem Rahmen (3) aufgegossen wird.

3. Verfahren nach Anspruch 1,

**dadurch gekennzeichnet,** daß die Siebfläche (1) im gedehnten Zustand auf den Rand (2) oder Rahmen (3) aufgeklebt, aufvulkanisiert oder aufgeschmolzen wird.

4. Verfahren nach einem der Ansprüche 1 bis 3,

**dadurch gekennzeichnet,** daß die Siebfläche (1) um mindestens 1% ihrer Länge und/oder Breite gedehnt wird.

5. Verfahren nach einem der Ansprüche 1 bis 4,

**dadurch gekennzeichnet,** daß Siebfläche (1) und Rahmen (3) voneinander getrennt hergestellt und durch das Material des Rahmens (2) miteinander verbunden werden.

6. Siebelement hergestellt in einem Verfahren nach einem der Ansprüche 1 bis 5,

**dadurch gekennzeichnet,** daß die Armierung des Randes (2) einen vierseitigen Rahmen (3) bildet, der die Spannung der vorgespannten Siebfläche (1) dauerhaft aufrecht erhält.

7. Siebelement nach Anspruch 6,

**dadurch gekennzeichnet,** daß der im Kunststoff des Randes (2) eingebettete rechteckförmige Rahmen (3) aus Stahl und/oder Glasfaserkunststoff besteht.

8. Siebelement nach Anspruch 7,

**dadurch gekennzeichnet,** daß der Stahl ein Federstahl ist.

9. Siebelement nach einem der Ansprüche 6 bis 8,

**dadurch gekennzeichnet,** daß Rand (2) und Siebfläche (1) aus demselben Kunststoff, insbesondere aus Polyurethan oder gummielastischem Material bestehen.

10. Siebbelag nach einem der Ansprüche 6 bis 9,

**dadurch gekennzeichnet,** daß die seitlichen Stirnseiten (4) der Siebelementenlängsränder Vor- und oder Rücksprünge aufweisen, mit denen sie an der Unterkonstruktion, an Zwischenleisten oder an benachbarten Siebelementen befestigbar sind.

EP 0 296 273 A2